# EUROPEAN PATENT APPLICATION

(11) **EP 4 521 518 A2**
(43) Date of publication of application: **12.03.2025**
(21) Application number: 24191387.0
(22) Date of filing: 29.07.2024
(51) Int. Cl.: H01M 50/103, H01M 50/528, H01M 50/54

(54) **METHOD OF MANUFACTURING SECONDARY BATTERY AND SECONDARY BATTERY**

(30) Priority: 11.09.2023 JP 2023147004
(71) Applicant: Prime Planet Energy & Solutions, Inc., Chuo-ku Tokyo 103-0022 (JP)
(72) Inventor: YASUDA, Masawo, Tokyo, 103-0022 (JP); WAKIMOTO, Ryoichi, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

A method of manufacturing a secondary battery includes: after producing a first electrode assembly (201) and a second electrode assembly (202), electrically connecting a second electrode tab (250) and a fourth electrode tab (280) to a second current collector (420) with the first electrode assembly (201) being disposed on one side with respect to the second current collector (420) and the second electrode assembly (202) being disposed on the other side with respect to the second current collector (420); and after joining the second electrode tab (250) and the fourth electrode tab (280), bending the second electrode tab (250) and the fourth electrode tab (280) such that the first electrode tab (220) and the third electrode tab (270) face each other so as to overlap the first electrode assembly (201) and the second electrode assembly (202) with each other.

## Description

### CROSS REFERENCE TO RELATED APPLICATIONS

This nonprovisional application is based on Japanese Patent Application No. 2023-147004 filed on September 11, 2023 with the Japan Patent Office, the entire contents of which are hereby incorporated by reference.

### BACKGROUND OF THE INVENTION

### Field of the Invention

The present technology relates to a method of manufacturing a secondary battery and the secondary battery.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

In the secondary battery described in Japanese Patent No. 4537353, there is room for attaining improved energy density and stable manufacturing of the secondary battery.

The present technology has been made to solve the above-described problem, and has an object to provide a method of manufacturing a secondary battery and the secondary battery so as to attain improved energy density and stable manufacturing thereof.

The present technology provides the following method of manufacturing a secondary battery.
[1] A method of manufacturing a secondary battery, the secondary battery comprising:
   a first electrode assembly and a second electrode assembly each including a first electrode and a second electrode having a polarity different from a polarity of the first electrode;
   a case that accommodates the first electrode assembly and the second electrode assembly; and
   a first electrode terminal electrically connected to the first electrode, wherein
   the first electrode assembly includes a first electrode tab disposed at a first end portion of the first electrode assembly and electrically connected to the first electrode, and a second electrode tab disposed at a second end portion of the first electrode assembly and electrically connected to the second electrode,
   the second electrode assembly includes a third electrode tab disposed at a third end portion of the second electrode assembly and electrically connected to the first electrode, and a fourth electrode tab disposed at a fourth end portion of the second electrode assembly and electrically connected to the second electrode,
   the first electrode tab is joined to a first current collector,
   the second electrode tab and the fourth electrode tab are joined to a second current collector,
   the third electrode tab is joined to a third current collector, and
   the first current collector and the third current collector are constituted of separate components,
   the method comprising:
      producing the first electrode assembly and the second electrode assembly;
      joining the first electrode tab to the first current collector after producing the first electrode assembly and the second electrode assembly;
      joining the third electrode tab to the third current collector after producing the first electrode assembly and the second electrode assembly;
      after producing the first electrode assembly and the second electrode assembly, electrically connecting the second electrode tab and the fourth electrode tab to the second current collector with the first electrode assembly being disposed on one side with respect to the second current collector and the second electrode assembly being disposed on the other side with respect to the second current collector;
      after joining the second electrode tab and the fourth electrode tab to the second current collector, bending the second electrode tab and the fourth electrode tab so as to overlap the first electrode assembly and the second electrode assembly with each other; and
      after overlapping the first electrode assembly and the second electrode assembly with each other, electrically connecting, to the first electrode terminal, the first current collector joined to the first electrode tab and the third current collector joined to the third electrode tab.
   Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the second current collector, and the second electrode assembly may not be disposed on a straight line in one direction, and the first electrode assembly or the second electrode assembly may be inclined with respect to the second current collector in the one direction.
[2] The method of manufacturing the secondary battery according to [1], wherein
   the case includes a case main body provided with a first opening, and a first sealing plate that seals the first opening, and
   the first sealing plate is provided with the first electrode terminal,
   the method comprising, after overlapping the first electrode assembly and the second electrode assembly with each other, inserting the first electrode assembly and the second electrode assembly into the case main body via the first opening with the second current collector side being inserted first.
[3] The method of manufacturing the secondary battery according to [2], wherein
   the case main body is provided with a second opening at an end portion of the case main body opposite to the first opening,
   the case includes a second sealing plate that seals the second opening, and
   the second sealing plate is provided with a second electrode terminal electrically connected to the second electrode,
   the method comprising electrically connecting the second current collector to the second electrode terminal after inserting the first electrode assembly and the second electrode assembly into the case main body.
[4] The method of manufacturing the secondary battery according to any one of [1] to [3], wherein the first electrode tab and the third electrode tab are curved in opposite directions such that tip portions of the first electrode tab and the third electrode tab located at respective end portions of the first electrode tab and the third electrode tab on a side opposite to a side on which the first electrode is connected are close to each other.
[5] The method of manufacturing the secondary battery according to any one of [1] to [3], wherein the first electrode tab and the third electrode tab are curved in the same direction such that tip portions of the first electrode tab and the third electrode tab located at respective end portions of the first electrode tab and the third electrode tab on a side opposite to a side on which the first electrode is connected are oriented in the same direction.
[6] The method of manufacturing the secondary battery according to any one of [1] to [5], wherein the second current collector is constituted of a single component.
   The present technology provides the following secondary battery.
[7] A secondary battery comprising:
   a first electrode assembly and a second electrode assembly each including a first electrode and a second electrode having a polarity different from a polarity of the first electrode;
   a case that accommodates the first electrode assembly and the second electrode assembly; and
   a first electrode terminal electrically connected to the first electrode, wherein
   the first electrode assembly includes a first electrode tab disposed at a first end portion of the first electrode assembly and electrically connected to the first electrode, and a second electrode tab disposed at a second end portion of the first electrode assembly and electrically connected to the second electrode,
   the second electrode assembly includes a third electrode tab disposed at a third end portion of the second electrode assembly and electrically connected to the first electrode, and a fourth electrode tab disposed at a fourth end portion of the second electrode assembly and electrically connected to the second electrode,
   the first electrode assembly and the second electrode assembly are arranged side by side in a thickness direction of each of the first electrode assembly and the second electrode assembly,
   the first electrode tab is joined to a first current collector,
   the second electrode tab and the fourth electrode tab are joined to a second current collector,
   the third electrode tab is joined to a third current collector, and
   the first current collector and the third current collector are constituted of separate components.
[8] The secondary battery according to [7], wherein
   the case includes a case main body provided with a first opening, and a first sealing plate that seals the first opening, and
   the first sealing plate is provided with the first electrode terminal.
[9] The secondary battery according to [8], wherein
   the case main body is provided with a second opening at an end portion of the case main body opposite to the first opening,
   the case includes a second sealing plate that seals the second opening, and
   the second sealing plate is provided with a second electrode terminal electrically connected to the second electrode.
[10] The secondary battery according to any one of [7] to [9], wherein the second electrode tab and the fourth electrode tab are curved in opposite directions such that tip portions of the second electrode tab and the fourth electrode tab located at respective end portions of the second electrode tab and the fourth electrode tab on a side opposite to a side on which the second electrode is connected are close to each other.
[11] The secondary battery according to any one of [7] to [10], wherein the first electrode tab and the third electrode tab are curved in opposite directions such that tip portions of the first electrode tab and the third electrode tab located at respective end portions of the first electrode tab and the third electrode tab on a side opposite to a side on which the first electrode is connected are close to each other.
[12] The secondary battery according to any one of [7] to [10], wherein the first electrode tab and the third electrode tab are curved in the same direction such that tip portions of the first electrode tab and the third electrode tab located at respective end portions of the first electrode tab and the third electrode tab on a side opposite to a side on which the first electrode is connected are oriented in the same direction.
[13] The secondary battery according to any one of [7] to [12], wherein the second current collector is constituted of a single component.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment of the present technology.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a front view showing a negative electrode raw plate before a negative electrode plate is formed.
Fig. 8 is a cross sectional view of the negative electrode raw plate shown in Fig. 7 along VIII-VIII.
Fig. 9 is a front view showing the negative electrode plate formed from the negative electrode raw plate.
Fig. 10 is a front view showing a positive electrode raw plate before a positive electrode plate is formed.
Fig. 11 is a cross sectional view of the positive electrode raw plate shown in Fig. 10 along XI-XI.
Fig. 12 is a front view showing the positive electrode plate formed from the positive electrode raw plate.
Fig. 13 is a cross sectional view of the secondary battery shown in Fig. 1 along XIII-XIII.
Fig. 14 is a cross sectional view of the secondary battery shown in Fig. 1 along XIV-XIV.
Fig. 15 is a flowchart showing a method of manufacturing the secondary battery according to the first embodiment.
Fig. 16 is a perspective view showing a state before two electrode assemblies included in the secondary battery according to the first embodiment are overlapped with each other.
Fig. 17 is a cross sectional view of each of the electrode assemblies and current collectors shown in Fig. 16 along XVII-XVII.
Fig. 18 is a perspective view showing a state of attaching a holder and a spacer to the electrode assembly.
Fig. 19 is a perspective view showing a state of attaching a first sealing plate to a first current collector.
Fig. 20 is a cross sectional view of each of the electrode assemblies and the current collectors shown in Fig. 19 along XX-XX.
Fig. 21 is a perspective view showing a state of inserting the electrode assemblies into a case main body.
Fig. 22 is a perspective view showing a state of attaching a second sealing plate to a second current collector.
Fig. 23 is a cross sectional view of each of the electrode assemblies and the current collectors shown in Fig. 22 along XXIII-XXIII.
Fig. 24 is a perspective view showing a configuration of the secondary battery according to the first embodiment.
Fig. 25 is a cross sectional view showing a configuration of a secondary battery according to a second embodiment.
Fig. 26 is a plan view showing a state before two electrode assemblies included in the secondary battery according to the second embodiment are overlapped with each other.
Fig. 27 is a plan view showing a state before two electrode assemblies included in a secondary battery according to a third embodiment are overlapped with each other.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represents a positive electrode and a negative electrode.

It should be noted that in each of the figures, the X direction is defined to represent a direction along a winding axis of an electrode assembly included in the secondary battery, the Y direction is defined to represent a short-side direction of the electrode assembly when viewed in the X direction, and the Z direction is defined to represent a long-side direction of the electrode assembly when viewed in the X direction. Further, in order to facilitate understanding of the invention, the size of each configuration in the figures may be illustrated to be changed from its actual size.

In the specification of the present application, the first direction (X direction) may be referred to as a "width direction" of the secondary battery or the case main body, the second direction (Y direction) may be referred to as a "thickness direction" of the secondary battery or the case main body, and the third direction (Z direction) may be referred to as a "height direction" of the secondary battery or the case main body.

### (First Embodiment)

### (Overall Configuration of Battery)

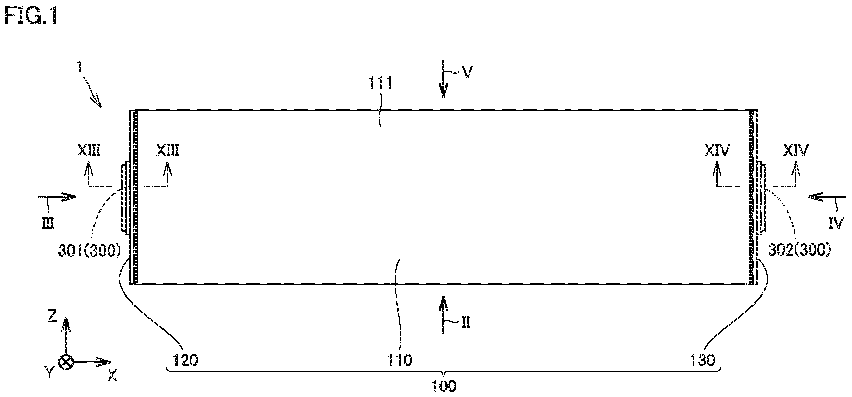

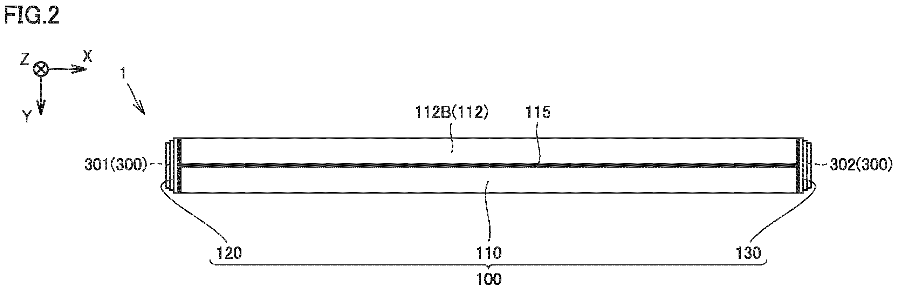

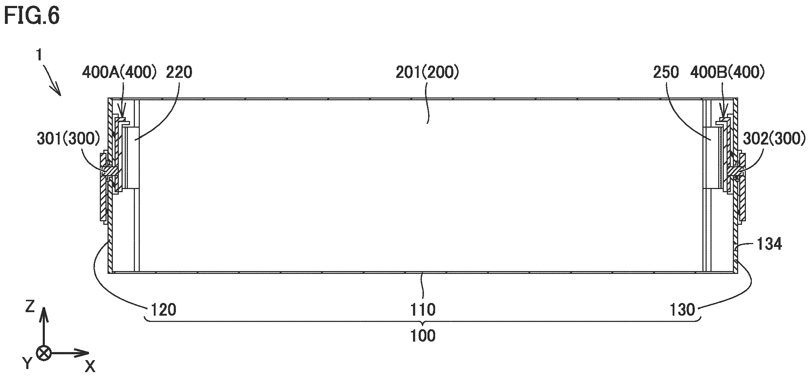

Fig. 1 is a front view of a secondary battery 1 according to the present embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (BEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a first sealing plate 120, and a second sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, first sealing plate 120 and second sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

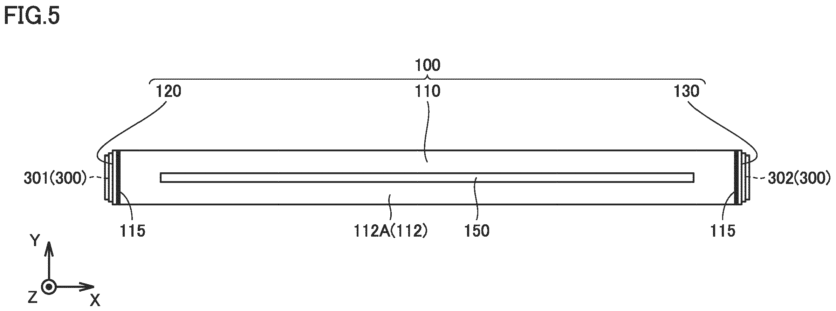

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. Gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, a joining portion 115 is formed at the other second side surface portion 112B of the pair of second side surface portions 112. Joining portion 115 extends in the width direction (X direction) of secondary battery 1. At joining portion 115, the end sides of the plate-shaped member of case main body 110 are joined to each other.

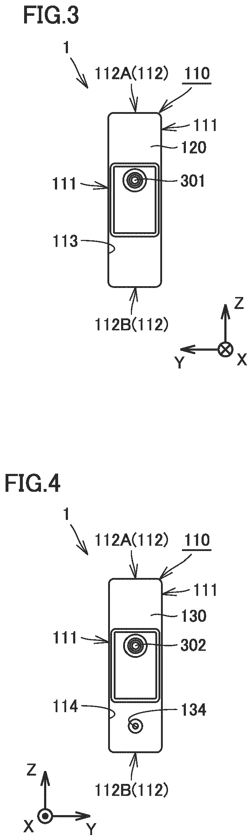

As shown in Fig. 3, a first opening 113 is provided at an end portion of case main body 110 on a first side in the first direction (X direction). First opening 113 is sealed by first sealing plate 120. Joining portion 115 is formed at first opening 113 so as to seal first opening 113. Each of first opening 113 and first sealing plate 120 has a substantially rectangular shape in which the Y direction corresponds to its short-side direction and the Z direction corresponds to its long-side direction.

A negative electrode terminal 301 (first electrode terminal) is provided on first sealing plate 120. The position of negative electrode terminal 301 can be appropriately changed.

As shown in Fig. 4, a second opening 114 is provided at an end portion of case main body 110 on a second side opposite to the first side in the first direction (X direction). That is, second opening 114 is located at the end portion opposite to first opening 113. Second opening 114 is sealed by second sealing plate 130. Joining portion 115 is formed at second opening 114 so as to seal second opening 114. Each of second opening 114 and second sealing plate 130 has a substantially rectangular shape in which the Y direction corresponds to its short-side direction and the Z direction corresponds to its long-side direction.

Second sealing plate 130 is provided with a positive electrode terminal 302 (second electrode terminal) and an injection hole 134. The positions of positive electrode terminal 302 and injection hole 134 can be appropriately changed.

Each of first sealing plate 120 and second sealing plate 130 is composed of a metal. Specifically, each of first sealing plate 120 and second sealing plate 130 is composed of aluminum, an aluminum alloy, iron, an iron alloy, or the like.

Negative electrode terminal 301 is electrically connected to a negative electrode (first electrode) of electrode assembly 200. Negative electrode terminal 301 is attached to first sealing plate 120, i.e., case 100.

Positive electrode terminal 302 is electrically connected to a positive electrode (second electrode) of electrode assembly 200. Positive electrode terminal 302 is attached to second sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed with a sealing member (not shown). As the sealing member, for example, a blind rivet or another metal member can be used.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The strip-shaped separator can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group. It should be noted that electrode assembly 200 may include a plurality of wound type electrode assemblies or may include a plurality of stacked type electrode assemblies.

As shown in Fig. 6, case 100 accommodates electrode assembly 200. Fig. 6 illustrates a first electrode assembly 201 described below. First electrode assembly 201 is accommodated in case 100 such that the winding axis thereof is parallel to the X direction.

Specifically, one or a plurality of the wound type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

First electrode assembly 201 includes: a main body portion (portion in which a positive electrode plate and a negative electrode plate are stacked with a separator being interposed therebetween); a first tab 220 (negative electrode tab group); and a second electrode tab 250 (positive electrode tab group).

The main body portion is constituted of a below-described negative electrode plate 210 and a below-described positive electrode plate 240. First electrode tab 220 is located at an end portion of first electrode assembly 201 on the first side with respect to the main body portion in the first direction (X direction). The first side in the present embodiment is the first sealing plate 120 side. Second electrode tab 250 is located at an end portion of first electrode assembly 201 on the second side with respect to the main body portion in the first direction (X direction). The second side in the present embodiment is the second sealing plate 130 side.

Each of first electrode tab 220 and second electrode tab 250 is formed to protrude from a central portion of electrode assembly 200 toward first sealing plate 120 or second sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on first sealing plate 120 with an insulating member composed of a resin being interposed therebetween. Negative electrode current collector 400A is electrically connected to first electrode tab 220 and negative electrode terminal 301. Negative electrode current collector 400A is composed of a conductive material (more specifically, a metal), and can be composed of copper, a copper alloy, or the like, for example. It should be noted that details of negative electrode current collector 400A will be described later.

Positive electrode current collector 400B is disposed on second sealing plate 130 with an insulating member composed of a resin being interposed therebetween. Positive electrode current collector 400B is electrically connected to second electrode tab 250 and positive electrode terminal 302. Positive electrode current collector 400B is composed of a conductive material (more specifically, a metal), and can be composed of aluminum, an aluminum alloy, or the like, for example. It should be noted that second electrode tab 250 may be electrically connected to second sealing plate 130 directly or via positive electrode current collector 400B. In this case, second sealing plate 130 may serve as positive electrode terminal 302. Moreover, details of positive electrode current collector 400B will be described later.

### (Configuration of Electrode Assembly 200)

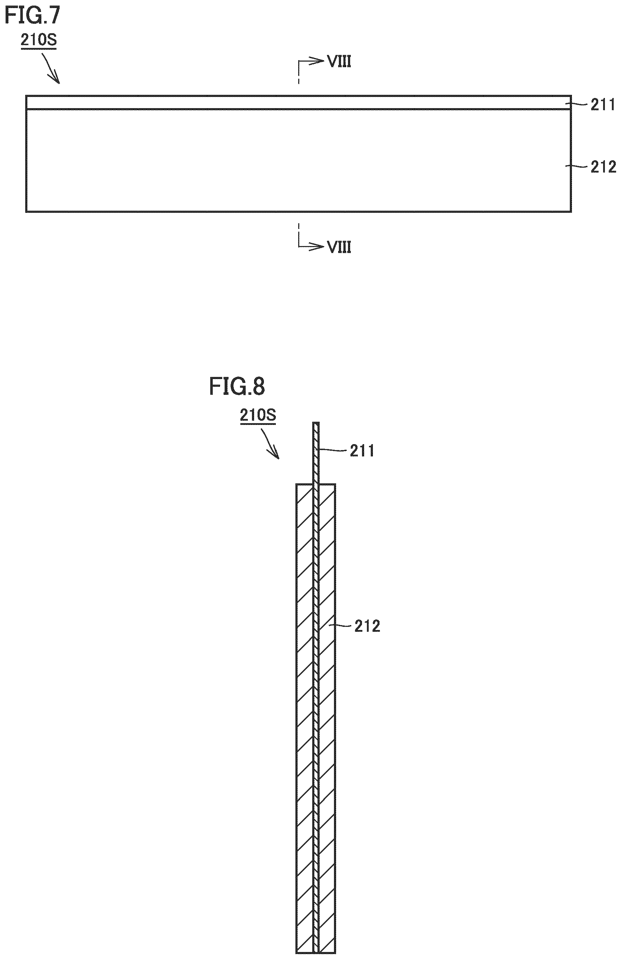

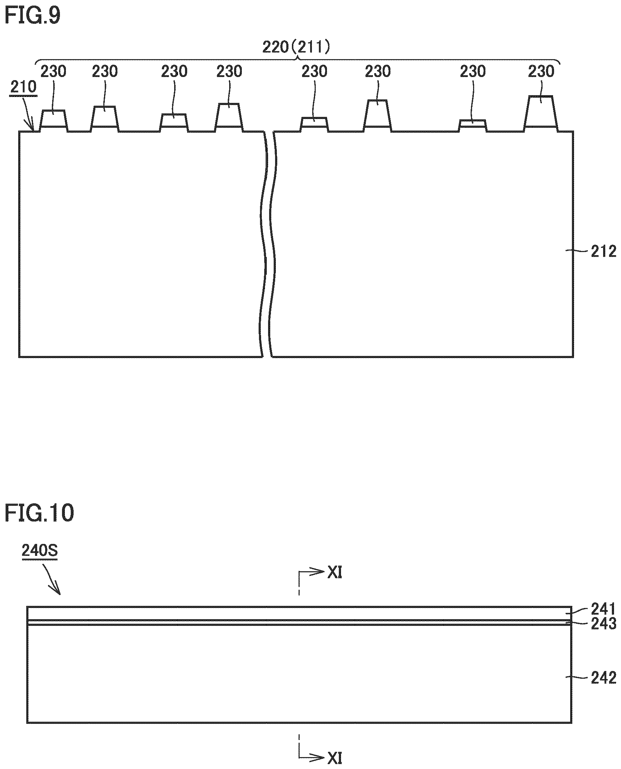

Fig. 7 is a front view showing a negative electrode raw plate 210S before negative electrode plate 210 (first electrode) is formed, Fig. 8 is a cross sectional view of negative electrode raw plate 210S shown in Fig. 7 along VIII-VIII, and Fig. 9 is a front view showing negative electrode plate 210 formed from negative electrode raw plate 210S.

Negative electrode plate 210 is manufactured by processing negative electrode raw plate 210S. As shown in Figs. 7 and 8, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 9, a plurality of negative electrode tabs 230 each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form first electrode tab 220. Thus, first electrode tab 220 is connected to negative electrode plate 210 (first electrode). The position of each of the plurality of negative electrode tabs 230 and the length thereof in the protruding direction are appropriately adjusted in consideration of the state in which first electrode tab 220 is connected to negative electrode current collector 400A. It should be noted that the shape of negative electrode tab 230 is not limited to the one illustrated in Fig. 8.

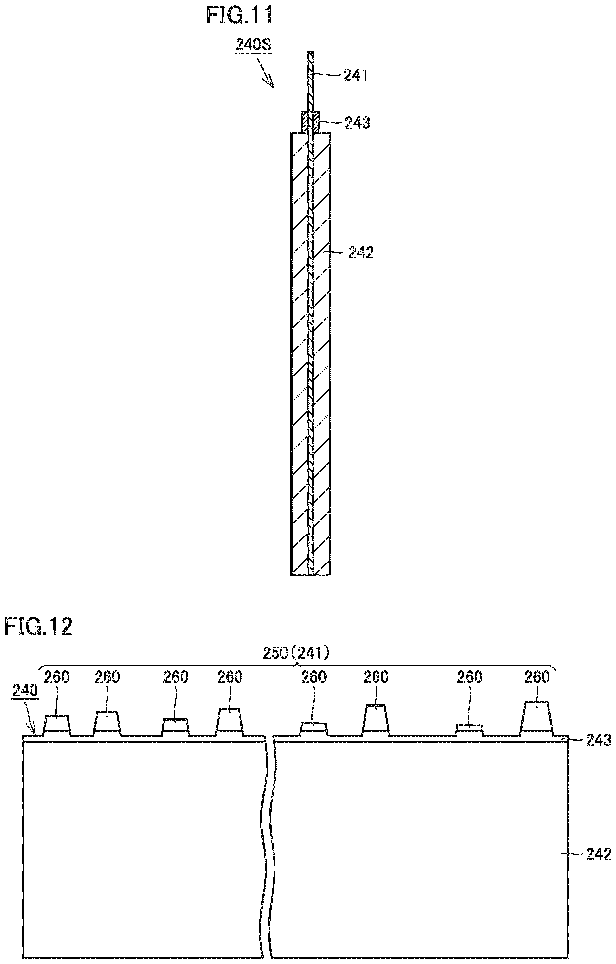

Fig. 10 is a front view showing a positive electrode raw plate 240S before positive electrode plate 240 (second electrode) is formed, Fig. 11 is a cross sectional view of positive electrode raw plate 240S shown in Fig. 10 along XI-XI, and Fig. 12 is a front view showing positive electrode plate 240 formed from positive electrode raw plate 240S.

Positive electrode plate 240 serving as the second electrode has a polarity different from a polarity of negative electrode plate 210 serving as the first electrode. Positive electrode plate 240 is manufactured by processing positive electrode raw plate 240S. As shown in Figs. 10 and 11, positive electrode raw plate 240S includes a positive electrode core body 241, a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 240S including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 240S can be cut by laser processing with application of an energy ray, die processing, cutter processing, or the like.

As shown in Fig. 12, a plurality of positive electrode tabs 260 each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form second electrode tab 250. Thus, second electrode tab 250 is connected to positive electrode plate 240 (second electrode). The position of each of the plurality of positive electrode tabs 260 and the length thereof in the protruding direction are appropriately adjusted in consideration of the state in which second electrode tab 250 is connected to positive electrode current collector 400B. It should be noted that the shape of positive electrode tab 260 is not limited to the one illustrated in Fig. 12.

Positive electrode protective layer 243 is provided at the root of each of the plurality of positive electrode tabs 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of first electrode tab 220 is smaller than the thickness of second electrode tab 250.

### (Connection Structure between Electrode Assembly 200 and Current Collector 400)

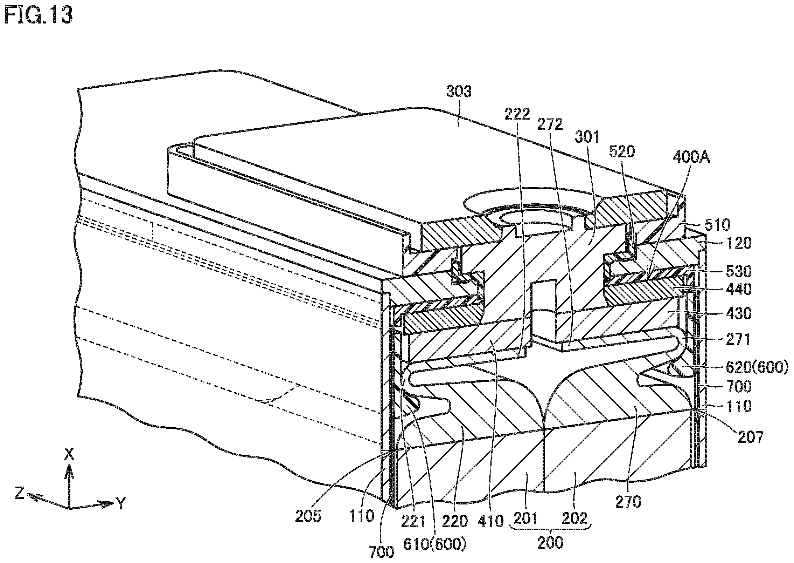

Fig. 13 is a cross sectional view of the secondary battery shown in Fig. 1 along XIII-XIII. As shown in Fig. 13, electrode assembly 200 includes first electrode assembly 201 and a second electrode assembly 202. Each of first electrode assembly 201 and second electrode assembly 202 includes a first electrode (negative electrode) and a second electrode (positive electrode). It should be noted that electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes first electrode tab 220. First electrode tab 220 is electrically connected to the first electrode at its first end portion 205 in the X direction. Second electrode assembly 202 includes a third electrode tab 270. Third electrode tab 270 is electrically connected to the first electrode at its third end portion 207 in the X direction.

First electrode tab 220 has a curved portion 221 and a tip portion 222. Curved portion 221 is a portion at which first electrode tab 220 is curved on the side, on which the first electrode is connected, with respect to tip portion 222. Tip portion 222 is a portion located at an end portion of first electrode tab 220 on the side opposite to the side on which the first electrode is connected.

Third electrode tab 270 has a curved portion 271 and a tip portion 272. Curved portion 271 is a portion at which third electrode tab 270 is curved on the side, on which the first electrode is connected, with respect to tip portion 272. Tip portion 272 is a portion located at an end portion of third electrode tab 270 on the side opposite to the side on which the first electrode is connected.

First electrode tab 220 and third electrode tab 270 are curved in opposite directions such that tip portions 222, 272 are close to each other. It should be noted that tip portions 222, 272 are separated from each other in the present embodiment; however, it is not limited to this configuration, and tip portions 222, 272 may be in contact with each other.

Negative electrode current collector 400A electrically connects negative electrode terminal 301 to first electrode tab 220 and third electrode tab 270. Negative electrode current collector 400A in the present embodiment is connected to negative electrode terminal 301 between electrode assembly 200 and first sealing plate 120.

Negative electrode current collector 400A includes a first current collector 410, a third current collector 430, and a first-electrode-terminal-side current collector 440.

First current collector 410 is a plate-shaped member. First current collector 410 has a long-side direction in the Z direction and a short-side direction in the Y direction. Third current collector 430 is a plate-shaped member. Third current collector 430 has a long-side direction in the Z direction and a short-side direction in the Y direction. First current collector 410 and third current collector 430 are arranged side by side in parallel in the Y direction. In this way, first current collector 410 and third current collector 430 are constituted of separate components.

First electrode tab 220 is joined to first current collector 410 at a joining location 411 described later. Third electrode tab 270 is joined to third current collector 430 at a joining location 431 described later. Joining locations 411, 431 can be formed by, for example, ultrasonic welding, resistance welding, laser welding, swaging, or the like. In the present embodiment, first electrode tab 220 and first current collector 410 are joined by ultrasonic joining, and third electrode tab 270 and third current collector 430 are joined by ultrasonic joining, for example.

First-electrode-terminal-side current collector 440 is joined to each of first current collector 410 and third current collector 430 at a joining location (not shown) located at its end portion in the Z direction. First-electrode-terminal-side current collector 440 is connected to negative electrode terminal 301. The connection between first-electrode-terminal-side current collector 440 and negative electrode terminal 301 can be formed by, for example, swaging and/or welding.

Negative electrode terminal 301 is provided to be exposed to the outside of first sealing plate 120 and reach first-electrode-terminal-side current collector 440 of negative electrode current collector 400A provided on the inner surface side of first sealing plate 120. Negative electrode terminal 301 is connected to a first plate portion 303.

First plate portion 303 is located on the outer side with respect to first sealing plate 120. First plate portion 303 is disposed along first sealing plate 120. First plate portion 303 has electric conductivity. First plate portion 303 is disposed to secure an area of connection with a bus bar or the like that electrically connects secondary battery 1 and another secondary battery adjacent thereto. The connection between negative electrode terminal 301 and first plate portion 303 can be formed by, for example, laser welding.

A first insulating member 510 is disposed between first plate portion 303 and first sealing plate 120. A second insulating member 520 is disposed between negative electrode terminal 301 and first sealing plate 120. A third insulating member 530 is disposed between first-electrode-terminal-side current collector 440 and first sealing plate 120.

It should be noted that negative electrode terminal 301 may be electrically connected to first sealing plate 120. Further, first sealing plate 120 may serve as negative electrode terminal 301.

A spacer 600 is disposed between first sealing plate 120 and electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

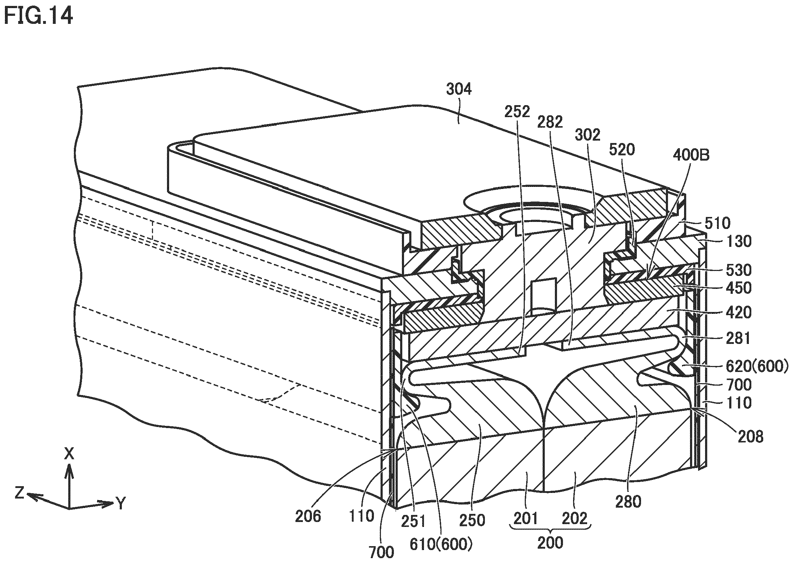

Fig. 14 is a cross sectional view of the secondary battery shown in Fig. 1 along XIV-XIV. The connection structure between electrode assembly 200 and current collector 400 on the second electrode (positive electrode) side of secondary battery 1 according to the present embodiment is different from that of the configuration on the first electrode (negative electrode) side in the following point: a portion corresponding to first current collector 410 and third current collector 430 on the first electrode (negative electrode) side is constituted of a single component.

First electrode assembly 201 includes second electrode tab 250. Second electrode tab 250 is electrically connected to the second electrode at its second end portion 206 in the X direction. Second electrode assembly 202 includes a fourth electrode tab 280. Fourth electrode tab 280 is electrically connected to the second electrode at its fourth end portion 208 in the X direction.

Second electrode tab 250 has a curved portion 251 and a tip portion 252. Curved portion 251 is a portion at which second electrode tab 250 is curved on the side, on which the second electrode is connected, with respect to tip portion 252. Tip portion 252 is a portion located at an end portion of second electrode tab 250 on the side opposite to the side on which the second electrode is connected.

Fourth electrode tab 280 has a curved portion 281 and a tip portion 282. Curved portion 281 is a portion at which fourth electrode tab 280 is curved on the side, on which the second electrode is connected, with respect to tip portion 282. Tip portion 282 is a portion located at an end portion of fourth electrode tab 280 on the side opposite to the side on which the second electrode is connected.

Second electrode tab 250 and fourth electrode tab 280 are curved in opposite directions such that tip portions 252, 282 are close to each other. It should be noted that tip portions 252, 282 are separated from each other in the present embodiment; however, it is not limited to this configuration, and tip portions 252, 282 may be in contact with each other.

Positive electrode current collector 400B electrically connects positive electrode terminal 302 to second electrode tab 250 and fourth electrode tab 280. Positive electrode current collector 400B in the present embodiment is connected to positive electrode terminal 302 between electrode assembly 200 and second sealing plate 130.

Positive electrode current collector 400B includes a second current collector 420 and a second-electrode-terminal-side current collector 450.

Second current collector 420 is a plate-shaped member. Second current collector 420 has a long-side direction in the Z direction and a short-side direction in the Y direction. Second current collector 420 is constituted of a single component in one piece.

Second electrode tab 250 and fourth electrode tab 280 are joined, at below-described joining locations 421, to second current collector 420 constituted of the single component. Each of joining locations 421 may be formed by ultrasonic welding, resistance welding, laser welding, swaging, or the like, for example. In the present embodiment, second electrode tab 250 and fourth electrode tab 280 are joined to second current collector 420 by ultrasonic joining, for example.

Second-electrode-terminal-side current collector 450 is joined to second current collector 420 at a joining location (not shown) located at its end portion in the Z direction. Second-electrode-terminal-side current collector 450 is connected to positive electrode terminal 302. The connection between second-electrode-terminal-side current collector 450 and positive electrode terminal 302 can be formed by, for example, swaging and/or welding.

Positive electrode terminal 302 is provided to be exposed to the outside of second sealing plate 130 and reach second-electrode-terminal-side current collector 450 of positive electrode current collector 400B provided on the inner surface side of second sealing plate 130. Positive electrode terminal 302 is connected to a second plate portion 304.

Second plate portion 304 is located on the outer side with respect to second sealing plate 130. Second plate portion 304 is disposed along second sealing plate 130. Second plate portion 304 has electric conductivity. Second plate portion 304 is disposed to secure an area of connection with secondary battery 1 and an external terminal. The connection between positive electrode terminal 302 and second plate portion 304 may be formed by, for example, laser welding.

A first insulating member 510 is disposed between second plate portion 304 and second sealing plate 130. A second insulating member 520 is disposed between positive electrode terminal 302 and second sealing plate 130. A third insulating member 530 is disposed between second-electrode-terminal-side current collector 450 and second sealing plate 130.

It should be noted that positive electrode terminal 302 may be electrically connected to second sealing plate 130. Further, second sealing plate 130 may serve as positive electrode terminal 302.

A spacer 600 is disposed between second sealing plate 130 and electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 251, 281 when forming curved portions 251, 281.

Insulating sheet 700 (electrode assembly holder) composed of a resin is disposed between electrode assembly 200 and case main body 110.

### (Manufacturing Process for Secondary Battery 1)

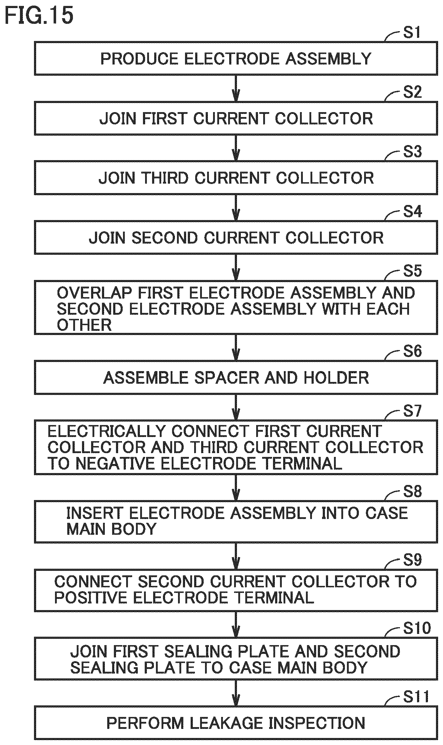

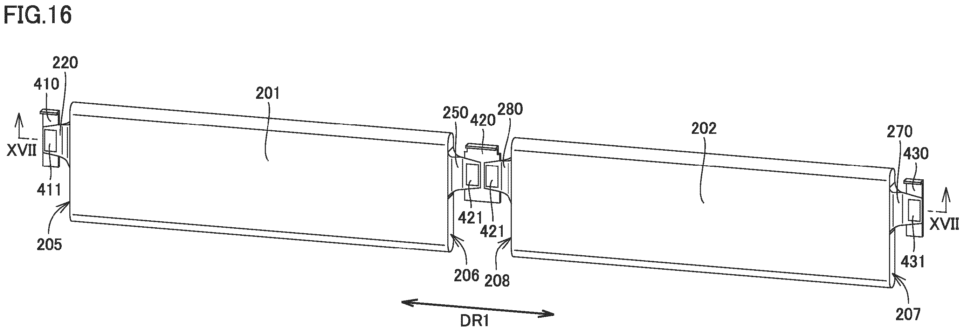

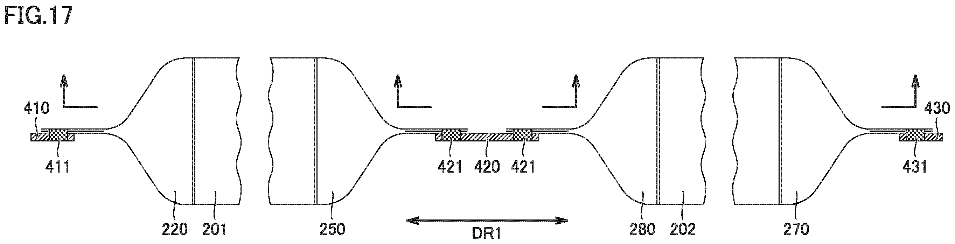

Hereinafter, a method of manufacturing the secondary battery according to the present embodiment will be described. Fig. 15 is a flowchart showing a method of manufacturing the secondary battery according to the first embodiment. Fig. 16 is a perspective view showing a state before the two electrode assemblies included in the secondary battery according to the first embodiment are overlapped with each other. Fig. 17 is a cross sectional view of each of the electrode assemblies and the current collectors shown in Fig. 16 along XVII-XVII.

As shown in Fig. 15, in the method of manufacturing the secondary battery according to the present embodiment, first, first electrode assembly 201 and second electrode assembly 202 are produced (step S1). Part of the tips of first electrode tab 220, second electrode tab 250, third electrode tab 270, and fourth electrode tab 280 are cut such that they have the same tip length when bundled.

As shown in Figs. 15 to 17, after producing first electrode assembly 201 and second electrode assembly 202, first electrode tab 220 is joined to first current collector 410 (step S2). First electrode tab 220 is joined to first current collector 4 1 0 at joining location 411. Next, third electrode tab 270 is joined to third current collector 430 (step S3). Third electrode tab 270 is joined to third current collector 430 at joining location 431.

Next, first electrode assembly 201, second current collector 420, and second electrode assembly 202 are disposed side by side in this order in one direction (DR1 direction). Second electrode tab 250 is disposed on one side with respect to second current collector 420 in the one direction (DR1 direction). Second electrode tab 250 and fourth electrode tab 280 are joined to second current collector 420 with fourth electrode tab 280 being disposed on the other side with respect to second current collector 420 in the one direction (DR1 direction) (step S4). Second electrode tab 250 and fourth electrode tab 280 are joined to second current collector 420 at joining locations 421. Thus, second electrode tab 250 and fourth electrode tab 280 are electrically connected to second current collector 420 with first electrode assembly 201 being disposed on one side with respect to second current collector 420 and second electrode assembly 202 being disposed on the other side with respect to second current collector 420 in the one direction (DR1 direction). It should be noted that on this occasion, second electrode tab 250 and fourth electrode tab 280 may be connected to second current collector 420 with second electrode tab 250 and fourth electrode tab 280 being overlapped with each other.

As shown in Fig. 16, second electrode tab 250 and fourth electrode tab 280 are electrically connected to second electrode assembly 202 with the main body portion of first electrode assembly 201 (portion at which the positive electrode plate and the negative electrode plate are stacked with the separator being interposed therebetween) and the main body portion of second electrode assembly 202 being separated from each other. When second current collector 420 is viewed in a plan view in this state, the main body portion of first electrode assembly 201 and the main body portion of second electrode assembly 202 do not overlap with each other. It should be noted that the main body portion of first electrode assembly 201 and the main body portion of second electrode assembly 202 are preferably in such a positional relation that they do not overlap with second current collector 420 when second current collector 420 is viewed in a plan view.

At least one of second electrode tab 250 and fourth electrode tab 280 is preferably joined to second current collector 420 with first electrode assembly 201 and second electrode assembly 202 being arranged side by side in the one direction (DR1 direction). It should be noted that second electrode tab 250 or fourth electrode tab 280 may be joined to second current collector 420 before first electrode assembly 201 and second electrode assembly 202 are arranged side by side in the one direction (DR1 direction). It should be noted that second current collector 420 is particularly preferably a single metal component as in the present embodiment.

In the height direction of each of first electrode assembly 201 and second electrode assembly 202, each of first current collector 410, second current collector 420 and third current collector 430 is disposed on one side with respect to the center of each of first electrode assembly 201 and second electrode assembly 202. Thus, each of the current collectors can be formed to be short, thereby reducing the size of the current collector.

It should be noted that each of first current collector 410, second current collector 420, and third current collector 430 is not limited to this configuration. In the height direction of each of first electrode assembly 201 and second electrode assembly 202, each of first current collector 410, second current collector 420, and third current collector 430 may be disposed at the center of a corresponding one of first electrode assembly 201 and second electrode assembly 202. In this case, in the height direction of each of first electrode assembly 201 and second electrode assembly 202, each of first electrode tab 220, second electrode tab 250, third electrode tab 270, and fourth electrode tab 280 is disposed at the center of a corresponding one of first electrode assembly 201 and second electrode assembly 202 so as to correspond to a corresponding one of first current collector 410, second current collector 420, and third current collector 430.

Further, the order of the steps of joining first current collector 410, second current collector 420 and third current collector 430 to first electrode assembly 201 and second electrode assembly 202 is not limited to the one described above, and the order may be changed. Each of the respective steps of joining first current collector 410 and third current collector 430 to first electrode assembly 201 and second electrode assembly 202 is preferably performed before the below-described step of overlapping first electrode assembly 201 and second electrode assembly 202 with each other, and is preferably performed before the step of joining second current collector 420 to first electrode assembly 201 and second electrode assembly 202.

Next, after joining second electrode tab 250 and fourth electrode tab 280 to second current collector 420, second electrode tab 250 and fourth electrode tab 280 are bent such that first electrode tab 220 and third electrode tab 270 face each other in the thickness direction (direction orthogonal to the DR1 direction in Figs. 16 and 17) of each of first electrode assembly 201 and second electrode assembly 202, thereby overlapping first electrode assembly 201 and second electrode assembly 202 with each other (step S5). That is, first electrode assembly 201 and second electrode assembly 202 are collected together. It should be noted that at this point of time, first current collector 410, which is a metal component, and second current collector 420, which is a metal component, are separated from each other as separate components.

By bending second electrode tab 250 and fourth electrode tab 280 in the direction of arrow in Fig. 17, second end portion 206 and fourth end portion 208 are brought to be close to each other as compared with the state in the step of joining second electrode tab 250 and fourth electrode tab 280 to second current collector 420. Further, first end portion 205 and third end portion 207 are also brought close to each other as compared with the state in the step of joining second electrode tab 250 and fourth electrode tab 280 to second current collector 420. Thus, first electrode assembly 201 and second electrode assembly 202 are overlapped with each other.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the second current collector, and the second electrode assembly may not be disposed on a straight line in the one direction (DR1 direction), and the first electrode assembly or the second electrode assembly may be inclined with respect to the second current collector in the one direction (DR1 direction).

First electrode tab 220 and third electrode tab 270 are bent in the directions of arrows in Fig. 17. Thus, tip portions of first electrode tab 220 and third electrode tab 270 are disposed to face each other.

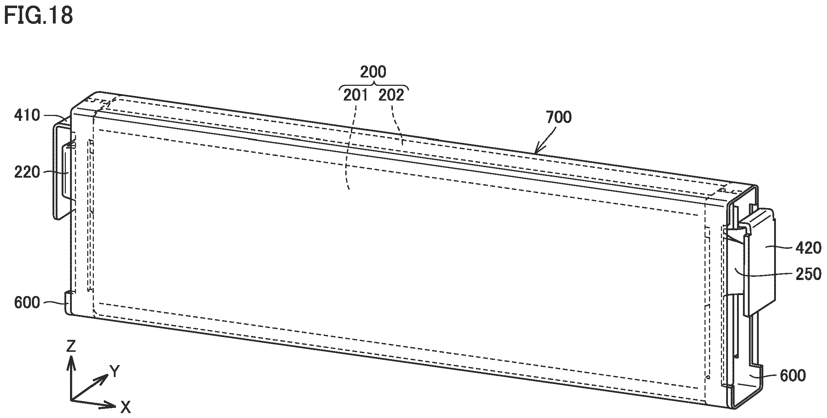

Fig. 18 is a perspective view showing a state of attaching a holder and a spacer to the electrode assembly. As shown in Figs. 15 and 18, next, spacer 600 and insulating sheet 700 are assembled to electrode assembly 200 (step S6). It should be noted that first electrode tab 220 and third electrode tab 270 may be bent after spacer 600 and insulating sheet 700 are assembled to electrode assembly 200.

It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which first electrode tab 220 and second electrode tab 250 are formed respectively.

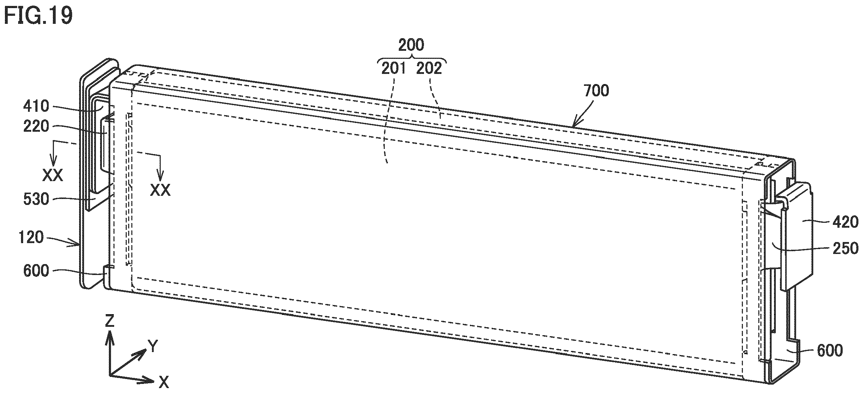

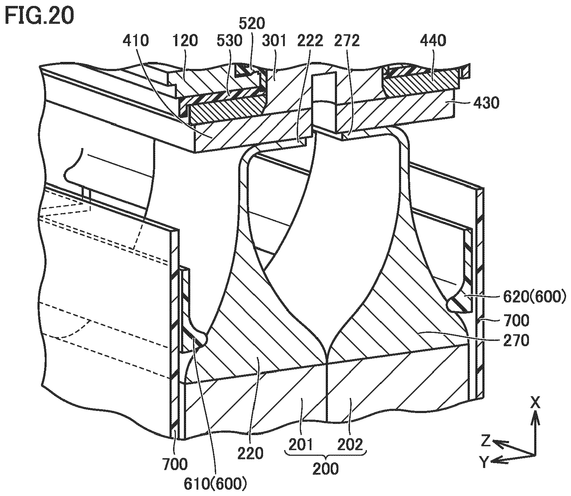

Fig. 19 is a perspective view showing a state of attaching the first sealing plate to the first current collector. Fig. 20 is a cross sectional view of each of the electrode assemblies and the current collectors shown in Fig. 19 along XX-XX.

As shown in Figs. 15, 19, and 20, first current collector 410 and third current collector 430 are electrically connected to negative electrode terminal 301 after joining first electrode tab 220, joining third electrode tab 270, and overlapping first electrode assembly 201 and second electrode assembly 202 with each other (step S7).

It should be noted that step S7 can be performed before step S6. By performing step S7 before step S6, negative electrode terminal 301 and each of first electrode tab 220 and third electrode tab 270 can be more stably connected to each other when electrically connecting them. Further, a configuration with a smaller space between first sealing plate 120 and the main body portion of electrode assembly 200 can be readily attained.

First electrode tab 220 and third electrode tab 270 are bent such that tip portions 222, 272 face each other.

Each of negative electrode terminal 301 and first-electrode-terminal side current collector 440 is attached to first sealing plate 120 with an insulating member being interposed therebetween. Then, first-electrode-terminal-side current collector 440 is brought into abutment with first current collector 410 and third collector 430 in the X direction. First-electrode-terminal side current collector 440 is joined to first current collector 410 and third current collector 430 by performing laser welding from between first sealing plate 120 and insulating sheet 700. It should be noted that the connecting of first plate portion 303 to negative electrode terminal 301 may be performed at any timing.

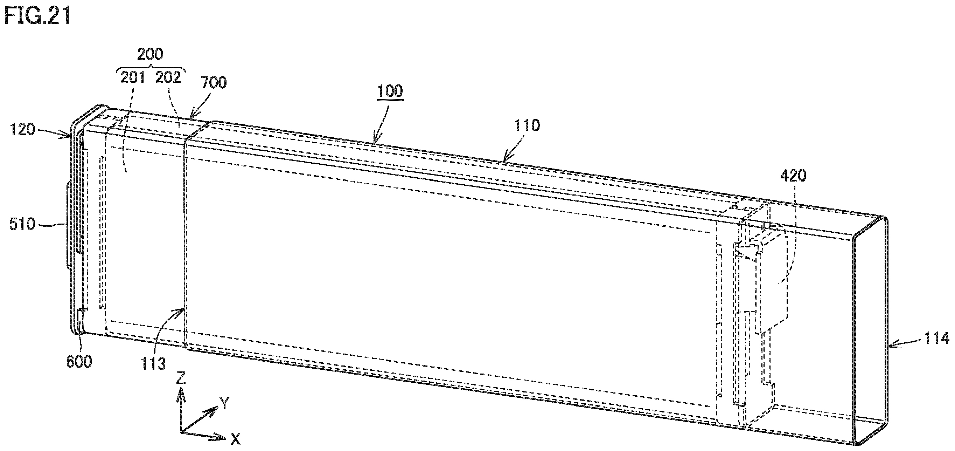

Fig. 21 is a perspective view showing a state of inserting the electrode assemblies into the case main body. As shown in Fig. 15 and Fig. 21, next, first electrode assembly 201 and second electrode assembly 202 overlapped with each other are inserted into case main body 110 via first opening 113 with the second current collector 420 side being inserted first (step S8).

First sealing plate 120 is brought into abutment with case main body 110. On this occasion, first electrode tab 220 and third electrode tab 270 are each brought into a curved state. As shown in Fig. 13, first electrode tab 220 and third electrode tab 270 are curved along the shape of spacer 600 such that the folded portions of curved portions 221, 271 are close to case main body 110 in the Y direction.

Thereafter, first sealing plate 120 is temporarily joined to case main body 110. By the temporary joining, first sealing plate 120 is partially joined to first opening 113 of case main body 110. Thus, first sealing plate 120 is positioned with respect to case main body 110.

When inserting electrode assembly 200 into case main body 110, electrode assembly 200 may be pulled from the second current collector 420 side, or may be pushed from each of the first current collector 410 side and the third current collector 430 side. When electrode assembly 200 is pressed from each of the first current collector 410 side and the third current collector 430 side, first electrode tab 220 and third electrode tab 270 can be curved at the same time.

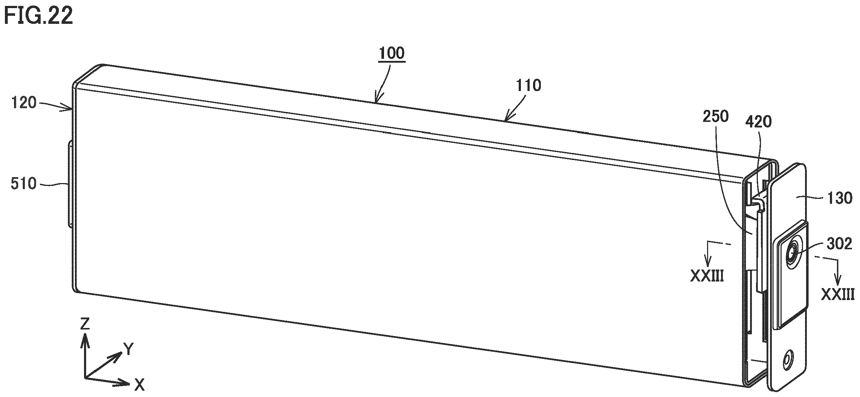

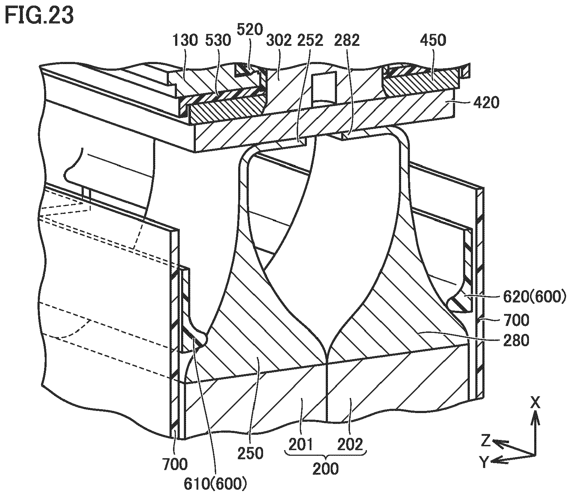

Fig. 22 is a perspective view showing a state of attaching the second sealing plate to the second current collector. Fig. 23 is a cross sectional view of each of the electrode assemblies and the current collectors shown in Fig. 22 along XXIII-XXIII. It should be noted that in Fig. 23, case main body 110 is not shown.

As shown in Figs. 15, 22, and 23, next, second current collector 420 is electrically connected to positive electrode terminal 302 after inserting first electrode assembly 201 and second electrode assembly 202 into case main body 110 (step S9).

Specifically, each of positive electrode terminal 302 and second-electrode-terminal-side current collector 450 is attached to second sealing plate 130 with an insulating member being interposed therebetween. Second-electrode-terminal-side current collector 450 is brought into abutment with second current collector 420 in the X direction. Second-electrode-terminal-side current collector 450 is joined to second current collector 420 by performing laser welding from between second sealing plate 130 and insulating sheet 700. It should be noted that the connecting of second plate portion 304 to positive electrode terminal 302 may be performed at any timing.

As shown in Fig. 23, second electrode tab 250 and fourth electrode tab 280 are bent such that tip portions 252, 282 face each other.

Second sealing plate 130 is brought into abutment with case main body 110. Thus, second electrode tab 250 and fourth electrode tab 280 are curved. As shown in Fig. 14, second electrode tab 250 and fourth electrode tab 280 are curved along the shape of spacer 600 such that the folded portions of curved portions 251, 281 are close to case main body 110 in the Y direction.

Thereafter, second sealing plate 130 is temporarily welded to case main body 110. By the temporary joining, second sealing plate 130 is partially joined to second opening 114 of case main body 110. Thus, second sealing plate 130 is positioned with respect to case main body 110.

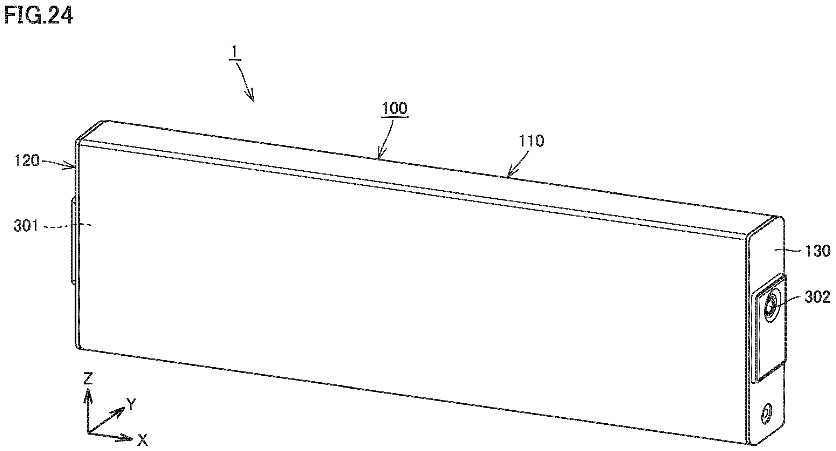

Fig. 24 is a perspective view showing a configuration of the secondary battery according to the first embodiment. As shown in Figs. 15 and 24, next, first sealing plate 120 and second sealing plate 130 are joined to case main body 110 (step S10). First sealing plate 120 seals first opening 113 of case main body 110, and second sealing plate 130 seals second opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with second sealing plate 130 facing upward and first sealing plate 120 facing downward, thereby injecting the electrolyte solution into case 100 via injection hole 134 of second sealing plate 130. Thereafter, charging is performed to result in release of gas. For performing the charging to result in release of gas, injection hole 134 may be temporarily sealed. Thereafter, the injection hole is sealed, thereby completing secondary battery 1.

In each of the method of manufacturing secondary battery 1 and secondary battery 1 according to the first embodiment of the present technology, second electrode tab 250 and fourth electrode tab 280 are electrically connected to second current collector 420 with first electrode assembly 201 being disposed on one side with respect to second current collector 420 and second electrode assembly 202 being disposed on the other side with respect to second current collector 420, and then first electrode assembly 201 and second electrode assembly 202 are overlapped with each other. With this configuration, the electrode tabs can be shortened as compared with a case where one collective electrode tab is formed by first electrode assembly 201 and second electrode assembly 202 and the electrode tab is bent. Further, with this configuration, it is possible to reduce the length of each tab as compared with the case where second electrode tab 250 and fourth electrode tab 280 in first electrode assembly 201 and second electrode assembly 202 after overlapping them with each other are each connected to second current collector 420. As a result, the occupied volume of the electrode tabs can be reduced, thereby improving the energy density of secondary battery 1. Further, in the case of forming first electrode assembly 201 and second electrode assembly 202 by forming separate electrode tabs for first electrode assembly 201 and second electrode assembly 202 and bending the electrode tabs, since the electrode tabs are readily bent as compared with a case where one collective electrode tab is formed by first electrode assembly 201 and second electrode assembly 202, the electrode tabs and the current collectors can be readily joined, thereby stably manufacturing the secondary battery. In particular, since secondary battery 1 can be stably manufactured, reliability of the connection portion between each of the electrode tabs and each of the current collectors can be increased.

In the method of manufacturing secondary battery 1 according to the first embodiment of the present technology, after second electrode tab 250 and fourth electrode tab 280 are joined by second current collector 420, first electrode assembly 201 and second electrode assembly 202 are inserted into case main body 110 from the second current collector 420 side on which second electrode tab 250 and fourth electrode tab 280 are joined and collected, with the result that electrode assembly 200 can be readily inserted into case main body 110.

In each of the method of manufacturing secondary battery 1 and secondary battery 1 according to the first embodiment of the present technology, electrode assembly 200 including first electrode assembly 201 and second electrode assembly 202 with the separate electrode tabs being formed in first electrode assembly 201 and second electrode assembly 202 and the separate electrode tabs being each bent can be applied to case main body 110 provided with first opening 113 and second opening 114 located at its end portion on the side opposite to first opening 113. Thus, when first opening 113 and second opening 114 of case main body 110 are arranged side by side in the horizontal direction, the height of secondary battery 1 can be low.

In each of the method of manufacturing secondary battery 1 and secondary battery 1 according to the first embodiment of the present technology, first electrode tab 220 and third electrode tab 270 are curved in the opposite directions such that the tip portions 222, 272 located at the end portions thereof on the side opposite to the side on which the first electrode is connected are close to each other, thus resulting in such a configuration that the electrode tabs can be readily shaped from the outside in the thickness direction of the electrode assembly.

In each of the method of manufacturing secondary battery 1 and secondary battery 1 according to the first embodiment of the present technology, since the electrode tabs can be connected by second current collector 420 constituted of a single component in one piece, it is possible to reduce the number of connection locations of constituent members and increase reliability of the connection portions between the electrode tabs and the current collectors as compared with a case where separate current collectors are respectively connected to the electrode tabs of first electrode assembly 201 and second electrode assembly 202.

Hereinafter, secondary batteries according to second and third embodiments will be described. Since the secondary battery according to each of these embodiments is different from secondary battery 1 according to the first embodiment of the present technology in terms of the connection structure between the electrode assembly and the current collector, the same configurations as those of secondary battery 1 according to the first embodiment of the present technology will not be described repeatedly.

### (Second Embodiment)

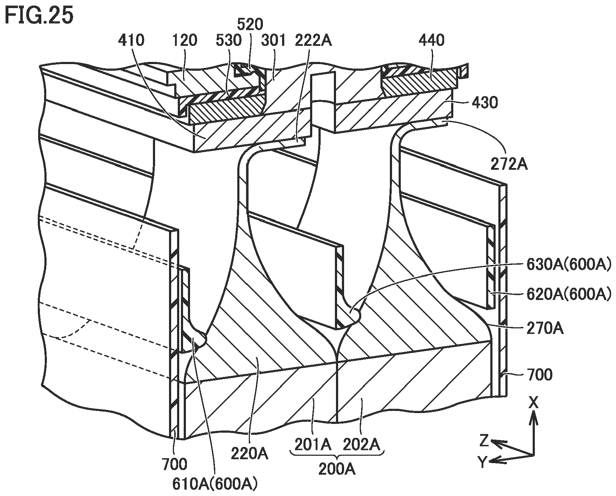

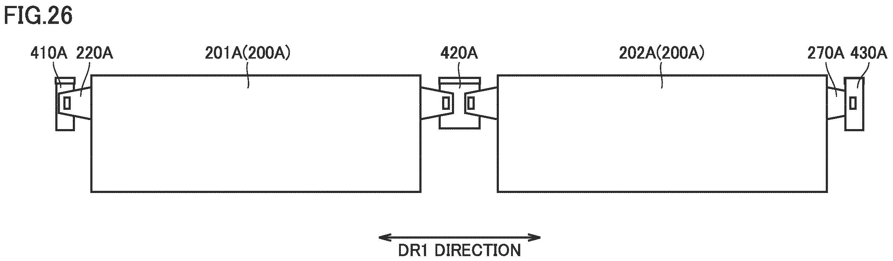

Fig. 25 is a cross sectional view showing a configuration of the secondary battery according to the second embodiment. Fig. 26 is a plan view showing a state before two electrode assemblies included in the secondary battery according to the second embodiment are overlapped with each other.

As shown in Fig. 25, in the secondary battery according to the second embodiment, tip portions 222A, 272A of a first electrode tab 220A and a third electrode tab 270A are bent in the same direction in the Y direction.

Thereafter, a first electrode assembly 201A and a second electrode assembly 202A are inserted into the case main body, and first sealing plate 120 is brought into abutment with the case main body. Thus, first electrode tab 220A and third electrode tab 270A are curved in the same direction such that tip portions 222A, 272A located at the end portions thereof on the side opposite to the side on which the first electrode is connected are oriented in the same direction. In order to facilitate curving of tip portions 222A, 272A in the same direction, a third component 630A of a spacer 600A is provided between first electrode tab 220A and third electrode tab 270A.

When tip portions 222A, 272A of first electrode tab 220A and third electrode tab 270A are curved in the same direction in the Y direction, first electrode assembly 201A and second electrode assembly 202A can be configured as electrode assemblies 200A of one type.

Specifically, as shown in Fig. 26, in a state in which first electrode assembly 201A and second electrode assembly 202A are joined to a second current collector 420A before overlapping first electrode assembly 201A and second electrode assembly 202A with each other, first current collector 410A is joined to first electrode tab 220A with first current collector 410A being disposed on one side (the back side in the plane of sheet in Fig. 26) with respect to first electrode tab 220A in the thickness direction of electrode assembly 200A orthogonal to the one direction (DR1 direction). Further, third current collector 430A is joined to third electrode tab 270A with third current collector 430A being disposed on the other side (front side in the plane of sheet in Fig. 26) with respect to third electrode tab 270A in the thickness direction of electrode assembly 200A orthogonal to the one direction (DR1 direction).

In the state before joining first electrode assembly 201A and second electrode assembly 202A to second current collector 420A, the positional relation of first current collector 410A with respect to first electrode tab 220A is the same as the positional relation of third current collector 430A with respect to third electrode tab 270A. For example, when second electrode assembly 202A is viewed such that third electrode tab 270A is located on the left side with respect to the center of second electrode assembly 202A in the plan view of Fig. 26, the positional relation of first current collector 410A with respect to first electrode tab 220A and the positional relation of third current collector 430A with respect to third electrode tab 270A are the same in that each of the current collectors is disposed on the back side of the plane of sheet of Fig. 26 with respect to a corresponding one of the electrode tabs. Therefore, in the state before joining first electrode assembly 201A and second electrode assembly 202A to second current collector 420A, first electrode assembly 201A and second electrode assembly 202 can be configured as electrode assemblies 200A of one type.

After overlapping first electrode assembly 201A and second electrode assembly 202A with each other, first electrode tab 220A and third electrode tab 270A are bent such that first current collector 410A and third current collector 430A are disposed on the first sealing plate 120 side with respect to first electrode tab 220A and third electrode tab 270A as shown in Fig. 25, with the result that tip portions 222A, 272A are bent in the same direction in the Y direction.

In each of the method of manufacturing the secondary battery and the secondary battery according to the second embodiment of the present technology, since first electrode tab 220A and third electrode tab 270A are curved in the same direction such that tip portions 222A, 272A of first electrode tab 220A and third electrode tab 270A are oriented in the same direction, the positional relation of first current collector 410A with respect to first electrode tab 220A can be the same as the positional relation of third current collector 430A with respect to third electrode tab 270A. Thus, since first electrode assembly 201A and second electrode assembly 202 can be configured as electrode assemblies 200A of one type, electrode assembly 200A can be readily manufactured.

### (Third Embodiment)

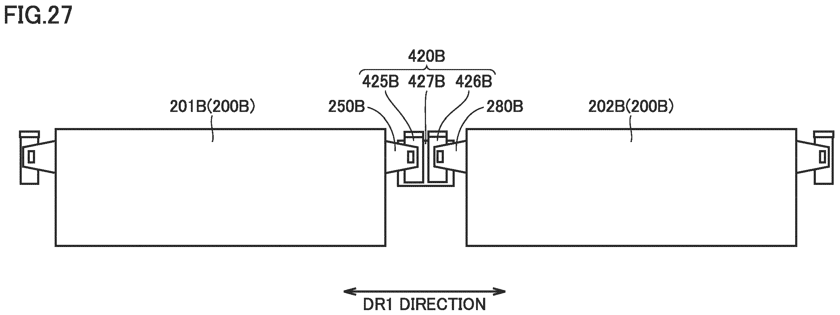

Fig. 27 is a plan view showing a state before two electrode assemblies included in the secondary battery according to the third embodiment are overlapped with each other.

As shown in Fig. 27, a second current collector 420B included in the secondary battery according to the third embodiment may be constituted of three members. Specifically, second current collector 420B has a first portion 425B, a second portion 426B, and a third portion 427B.

First portion 425B is joined to second electrode tab 250B, and second portion 426B is joined to fourth electrode tab 280B. Then, first portion 425B and second portion 426B are connected by third portion 427B with a first electrode assembly 201B and a second electrode assembly 202B being arranged side by side in the one direction (DR1 direction), thereby forming integrated second current collector 420B. Third portion 427B is joined to first portion 425B and second portion 426B. Second current collector 420B is finally integrally formed as a single component.

Here, each of first portion 425B and second portion 426B is a metal component. Third portion 427B is a resin member, and first portion 425B and second portion 426B can be held by third portion 427B. Thus, integrated second current collector 420B is formed. It should be noted that fitting, joining, welding, or the like can be considered as the method of holding. It should be noted that third portion 427B is not limited to the resin member.

In each of the method of manufacturing the secondary battery and the secondary battery according to the third embodiment of the present technology, second electrode tab 250B and fourth electrode tab 280B are electrically connected to second current collector 420B with first electrode assembly 201B being disposed on one side with respect to second current collector 420B and second electrode assembly 202B being disposed on the other side with respect to second current collector 420B, and then first electrode assembly 201B and second electrode assembly 202B are overlapped with each other. With this configuration, the electrode tabs can be shortened as compared with a case where one collective electrode tab is formed by first electrode assembly 201B and second electrode assembly 202B and the electrode tab is bent. Further, with this configuration, it is possible to reduce the length of each tab as compared with a case where second electrode tab 250B and fourth electrode tab 280B in first electrode assembly 201B and second electrode assembly 202B after overlapping them with each other are each connected to second current collector 420B. As a result, the occupied volume of the electrode tabs can be reduced, thereby improving the energy density of the secondary battery. Further, in the case of forming first electrode assembly 201B and second electrode assembly 202B by forming the separate electrode tabs in first electrode assembly 201B and second electrode assembly 202B and bending the electrode tabs, since the electrode tabs are readily bent as compared with the case where one collective electrode tab is formed by first electrode assembly 201B and second electrode assembly 202B, the electrode tabs and the current collectors can be readily joined, thereby stably manufacturing the secondary battery. In particular, since the secondary battery can be stably manufactured, reliability of the connection portions between the electrode tabs and the current collectors can be increased.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery (1), the secondary battery (1) comprising:
a first electrode assembly (201) and a second electrode assembly (202) each including a first electrode (210) and a second electrode (240) having a polarity different from a polarity of the first electrode (210);
a case (100) that accommodates the first electrode assembly (201) and the second electrode assembly (202); and
a first electrode terminal (300) electrically connected to the first electrode (210), wherein
the first electrode assembly (201) includes a first electrode tab (220) disposed at a first end portion (205) of the first electrode assembly (201) and electrically connected to the first electrode (210), and a second electrode tab (250) disposed at a second end portion (206) of the first electrode assembly (201) and electrically connected to the second electrode (240),
the second electrode assembly (202) includes a third electrode tab (270) disposed at a third end portion (207) of the second electrode assembly (202) and electrically connected to the first electrode (210), and a fourth electrode tab (280) disposed at a fourth end portion (208) of the second electrode assembly (202) and electrically connected to the second electrode (240),
the first electrode tab (220) is joined to a first current collector (410),
the second electrode tab (250) and the fourth electrode tab (280) are joined to a second current collector (420),
the third electrode tab (270) is joined to a third current collector (430), and
the first current collector (410) and the third current collector (430) are constituted of separate components,
the method comprising:
producing the first electrode assembly (201) and the second electrode assembly (202);
joining the first electrode tab (220) to the first current collector (410) after producing the first electrode assembly (201) and the second electrode assembly (202);
joining the third electrode tab (270) to the third current collector (430) after producing the first electrode assembly (201) and the second electrode assembly (202);
after producing the first electrode assembly (201) and the second electrode assembly (202), electrically connecting the second electrode tab (250) and the fourth electrode tab (280) to the second current collector (420) with the first electrode assembly (201) being disposed on one side with respect to the second current collector (420) and the second electrode assembly (202) being disposed on the other side with respect to the second current collector (420);
after joining the second electrode tab (250) and the fourth electrode tab (280) to the second current collector (420), bending the second electrode tab (250) and the fourth electrode tab (280) so as to overlap the first electrode assembly (201) and the second electrode assembly (202) with each other; and
after overlapping the first electrode assembly (201) and the second electrode assembly (202) with each other, electrically connecting, to the first electrode terminal (300), the first current collector (410) joined to the first electrode tab (220) and the third current collector (430) joined to the third electrode tab (270).

2. The method of manufacturing the secondary battery (1) according to claim 1, wherein
the case (100) includes a case main body (110) provided with a first opening (113), and a first sealing plate (120) that seals the first opening (113), and
the first sealing plate (120) is provided with the first electrode terminal (300),
the method comprising, after overlapping the first electrode assembly (201) and the second electrode assembly (202) with each other, inserting the first electrode assembly (201) and the second electrode assembly (202) into the case main body (110) via the first opening (113) with the second current collector (420) side being inserted first.

3. The method of manufacturing the secondary battery (1) according to claim 2, wherein
the case main body (110) is provided with a second opening (114) at an end portion of the case main body (110) opposite to the first opening (113),
the case (100) includes a second sealing plate (130) that seals the second opening (114), and
the second sealing plate (130) is provided with a second electrode terminal (300) electrically connected to the second electrode (240),
the method comprising electrically connecting the second current collector (420) to the second electrode terminal (300) after inserting the first electrode assembly (201) and the second electrode assembly (202) into the case main body (110).

4. The method of manufacturing the secondary battery (1) according to any one of claims 1 to 3, wherein the first electrode tab (220) and the third electrode tab (270) are curved in opposite directions such that tip portions (222, 272) of the first electrode tab (220) and the third electrode tab (270) located at respective end portions of the first electrode tab (220) and the third electrode tab (270) on a side opposite to a side on which the first electrode (210) is connected are close to each other.

5. The method of manufacturing the secondary battery (1) according to any one of claims 1 to 3, wherein the first electrode tab (220) and the third electrode tab (270) are curved in the same direction such that tip portions (222, 272) of the first electrode tab (220) and the third electrode tab (270) located at respective end portions of the first electrode tab (220) and the third electrode tab (270) on a side opposite to a side on which the first electrode (210) is connected are oriented in the same direction.

6. The method of manufacturing the secondary battery (1) according to any one of claims 1 to 5, wherein the second current collector (420) is constituted of a single component.

7. A secondary battery (1) comprising:
a first electrode assembly (201) and a second electrode assembly (202) each including a first electrode (210) and a second electrode (240) having a polarity different from a polarity of the first electrode (210);
a case (100) that accommodates the first electrode assembly (201) and the second electrode assembly (202); and
a first electrode terminal (300) electrically connected to the first electrode (210), wherein
the first electrode assembly (201) includes a first electrode tab (220) disposed at a first end portion (205) of the first electrode assembly (201) and electrically connected to the first electrode (210), and a second electrode tab (250) disposed at a second end portion (206) of the first electrode assembly (201) and electrically connected to the second electrode (240),
the second electrode assembly (202) includes a third electrode tab (270) disposed at a third end portion (207) of the second electrode assembly (202) and electrically connected to the first electrode (210), and a fourth electrode tab (280) disposed at a fourth end portion (208) of the second electrode assembly (202) and electrically connected to the second electrode (240),
the first electrode assembly (201) and the second electrode assembly (202) are arranged side by side in a thickness direction of each of the first electrode assembly (201) and the second electrode assembly (202),
the first electrode tab (220) is joined to a first current collector (410),
the second electrode tab (250) and the fourth electrode tab (280) are joined to a second current collector (420),
the third electrode tab (270) is joined to a third current collector (430), and
the first current collector (410) and the third current collector (430) are constituted of separate components.

8. The secondary battery (1) according to claim 7, wherein
the case (100) includes a case main body (110) provided with a first opening (113), and a first sealing plate (120) that seals the first opening (113), and
the first sealing plate (120) is provided with the first electrode terminal (300).

9. The secondary battery (1) according to claim 8, wherein
the case main body (110) is provided with a second opening (114) at an end portion of the case main body (110) opposite to the first opening (113),
the case (100) includes a second sealing plate (130) that seals the second opening (114), and
the second sealing plate (130) is provided with a second electrode terminal (300) electrically connected to the second electrode (240).

10. The secondary battery (1) according to any one of claims 7 to 9, wherein the second electrode tab (250) and the fourth electrode tab (280) are curved in opposite directions such that tip portions (252, 282) of the second electrode tab (250) and the fourth electrode tab (280) located at respective end portions of the second electrode tab (250) and the fourth electrode tab (280) on a side opposite to a side on which the second electrode (240) is connected are close to each other.

11. The secondary battery (1) according to any one of claims 7 to 10, wherein the first electrode tab (220) and the third electrode tab (270) are curved in opposite directions such that tip portions (222, 272) of the first electrode tab (220) and the third electrode tab (270) located at respective end portions of the first electrode tab (220) and the third electrode tab (270) on a side opposite to a side on which the first electrode (210) is connected are close to each other.

12. The secondary battery (1) according to any one of claims 7 to 10, wherein the first electrode tab (220) and the third electrode tab (270) are curved in the same direction such that tip portions (222, 272) of the first electrode tab (220) and the third electrode tab (270) located at respective end portions of the first electrode tab (220) and the third electrode tab (270) on a side opposite to a side on which the first electrode (210) is connected are oriented in the same direction.

13. The secondary battery (1) according to any one of claims 7 to 12, wherein the second current collector (420) is constituted of a single component.
